# EUROPEAN PATENT APPLICATION

(11) **EP 3 382 786 A1**
(43) Date of publication of application: **03.10.2018**
(21) Application number: 16868579.0
(22) Date of filing: 23.11.2016
(51) Int. Cl.: H01M 10/38, H01M 2/02, H01M 2/08, H01M 4/38, H01M 4/58, H01M 10/39

(54) **MOLTEN SODIUM BATTERY AND PARTITION WALL FOR MOLTEN SODIUM BATTERY**

(30) Priority: 24.11.2015 JP 2015228547; 29.02.2016 JP 2016037170
(71) Applicant: Yugenkaisha Chuseigiken, Nisshin-shi, Aichi 470-0114 (JP)
(72) Inventor: OHKAWA, Hiroshi, Nisshin-shi Aichi 470-0114 (JP)
(74) Representative: Winter, Brandl, Fürniss, Hübner, Röss, Kaiser, Polte - Partnerschaft mbB
(86) International application number: PCT/JP2016/084683
(87) International publication number: WO 2017/090636

(57) **Abstract**

It is an object to provide the following: a molten sodium battery providing readily-made sealing between a plate-shaped partition wall including an anode chamber in the interior and a metallic cathode container accommodating the plate-shaped partition wall in the interior to form an air-tight cathode chamber; and the plate-shaped partition wall.

A partition wall 11 includes: a partition-wall body 111 arranged within a metallic cathode container 12, which includes a cylinder-shaped cap 122 communicating the inside with the outside, having a plate shape, which includes: an anode chamber 110 at around the central site in the thickness direction; and a through bore 1175, and made of beta-alumina; and a nipple-shaped head 117 formed integrally with the partition-wall body 111, including a passage bore 1176 which is communicated with the anode chamber 110 by way of the through bore 1175, and attached air-tightly to the cap 122, and made of a ceramic material.

## Description

### TECHNICAL FIELD

The present invention relates to a molten sodium battery, which uses molten sodium serving as an anode active material, and beta-alumina serving as a solid electrolyte; and to a partition wall for molten sodium battery.

### BACKGROUND ART

A molten sodium battery involves two types of batteries having been in practical use, namely, a sodium-sulfur battery using molten sulfur for the cathode active material; and a sodium-molten salt battery using nickel chloride or the like for the cathode active material. Both of these molten sodium batteries adopt a partition wall made of beta-alumina serving as the solid electrolyte. Moreover, each of these molten sodium batteries, which are employed at a high temperature of from 250°C to 350°C, shows a rise in the temperature because the internal resistance heats the batteries themselves at the time of charging and discharging, and shows a decline in the temperature because heat leaks to the outside of the batteries when they are not charged and discharged. Thus, the molten sodium batteries show temperatures that fluctuate as they are charged and discharged. Besides, the molten sodium batteries are required to exhibit such durability as they withstand a long-time employment over a period of ten years or more.

Sodium making the anode active material of a molten sodium battery, compounds such as sodiumpolysulfides (which generate in the cathode chamber at the time of discharging), and furthermore beta-alumina (which composes the partition wall) are all weak against water. Consequently, the anode chamber and cathode chamber need to exhibit such high-degree air-tightness as being free of intruding watery components in the atmosphere.

Any of sodium-sulfur batteries and sodium molten-salt batteries, which have been put in practical use, employs, as a partition wall made of beta-alumina, a bottomed and upper-end-opened pipe with a test-tubed configuration. An insulation ring made of alpha-alumina is joined air-tightly to the upper end of the bottomed and upper-end-opened pipe by a glass joining agent. Moreover, a metallic lid is joined air-tightly to the inner-peripheral-face side of the insulation ring, forming one of the electrode chambers on the inner-peripheral-face side of the partition wall. In addition, a metallic case is joined air-tightly to the outer-peripheral-face side of the insulation ring, forming the other one of the electrode chambers on the outer-peripheral-face side of the partition wall.

In the sodium-sulfur batteries, the anode chamber is made by accommodating molten sodium in one of the electrode chambers on the inner-peripheral-face side of the partition wall, and the cathode chamber is made by accommodating molten sulfur in the other one of the electrode chambers on the outer-peripheral-face side of the partition wall. In contrast, in the sodium-molten salt batteries, the cathode chamber is made by accommodating a molten metallic chloride in one of the electrode chambers on the inner-peripheral-face side of the partition wall, and the anode chamber is made by accommodating molten sodium in the other one of the electrode chambers on the outer-peripheral-face side of the partition wall.

The partition wall separating the anode chamber and the cathode chamber from one another is exposed to pressures exerted from the opposite sides, namely, pressures exerted from within the cathode chamber and pressures exerted from within the anode chamber. Thus, the partition wall is deformed by pressures equivalent to differences between the two pressures. Beta-alumina composing the partition wall has such properties that it is strong against pushing but is weak against pulling, properties which are shared by ceramic. Consequently, for the partition wall, service conditions and configurations, which make tensile stresses act on the partition wall as less as possible, have been sought for. Lowering the pressures on the inner-peripheral-face side than the pressures on the outer-peripheral-face side allows putting the aforementioned bottomed and top-end-opened pipe formed as a test-tubed configuration in a state where pressing forces act on any part of the partition wall but tensile forces do not act on it. Another available configuration for the partition wall involves a plate-shaped partition wall disclosed in Japanese Unexamined Patent Publication (KOKAI) Gazette No. 50-38030. The plate-shaped partition wall has a plate-shaped outer shape, and includes finely-perforated anode chambers running parallel to each other in the interior. The plate-shaped partition wall is retained within the cathode chamber, and is employed under such a condition that the anode chambers, which are present inside the partition wall, are depressurized relative to that of the cathode chamber on the outside. Thus, the partition wall is put in a state where pressing forces act on the plate-shaped part in the partition wall, except for the lidded part, but tensile forces do not act on the plate-shaped part.

The partition wall made of beta-alumina involves other plate-shaped partition walls, which are a constituent element of sodium-sulfur batteries disclosed in patent literatures or the like, and which provide an anode chamber on one of the opposite sides and a cathode chamber on the other one of the opposite sides. However, these sodium-sulfur batteries have not been practical. That is, bending stresses acting on the plate-shaped partition wall result in tensile stresses acting on one of the opposite side surfaces in the plate-shaped partition wall, making engineering designers conceive such instances as the partition walls have been cracked.

### Related Technical Literature

### Patent Literature

Patent Literature No. 1: Japanese Unexamined Patent Publication (KOKAI) Gazette No. 6-196204; and
Patent Literature No. 2: Japanese Unexamined Patent Publication (KOKAI) Gazette No. 50-38030

### SUMMARY OF THE INVENTION

### Assignment to be Solved by the Invention

The partition wall including a bottomed and top-end-opened pipe having a test-tubed shape is made by joining an alpha-alumina ring to a beta-alumina pipe at the upper end by a glass joining agent and then joining metallic members to the alpha-alumina ring on the inner-peripheral-face side and the outer-peripheral-face side respectively. In this instance, the beta-alumina pipe having a wide opening at the upper end should be joined to the alpha-alumina ring over a wide junction area and even at two locations. Consequently, the joining requires a highly technical skill.

The plate-shaped partition wall including the anode chamber in the interior is composed of: a plate-shaped partition-wall body made of beta-alumina; and a lid joined to the partition-wall body at the upper end, formed as the shape of a rectangular plate, and made of alpha-alumina. Ametallic tubule is fitted into a through bore that is formed in the lid at around the central site. Then, a joining agent is filled in the interspace between the outer peripheral face of the tubule and the inner peripheral face of the through bore, joining the tubule to the lid. Meanwhile, the metallic cathode-chamber container has a boxed configuration formed as the shape of a rectangular parallelepiped opened at the upper end. The plate-shaped partition-wall body made of beta-alumina is inserted into the metallic cathode-chamber container. Then, a joining agent is filled in the interspace between the outer peripheral face in the rectangular plate-shaped lid of the partition wall and the upper inner peripheral face in the metallic cathode-chamber container covering the outer peripheral face in the lid, joining the lid to the metallic cathode-chamber container. The plate-shaped partition wall has joinder faces formed as a rectangular configuration whose parts making the sides are linear and long. Accordingly, it is believed as well that sealing might be damaged between the metals making the tubule and container and the ceramic materials making the partition-wall body and lid, because large coming-off stresses, which have been known as the bimetallic stress, act between the joined metals and ceramic materials. Consequently, the mode of sealing is poor in terms of practicality.

It is an object of the present invention to provide the following: a partition wall for molten sodium battery, partition wall which provides readily-made sealing between a plate-shaped partition wall including an anode chamber in the interior and a metallic cathode container accommodating the plate-shaped partition wall in the interior to form an air-tight cathode chamber; and a molten sodium battery comprising the partition wall.

### Means for Solving the Assignment

A partition wall for molten sodium battery according to the present invention comprises: a partition-wall body arranged within a metallic cathode container including a joint which has an opening communicating an inside of the cathode container with an outside thereof, the partition-wall body having a plate shape, which includes: an anode chamber at around a central site thereof in a thickness direction thereof; and a through bore connecting the anode chamber with an outside of the anode chamber, and made of beta-alumina; and a head fitted into the opening in the joint, formed integrally with the partition-wall body, including a passage bore which is communicated with the anode chamber by way of the through bore, attached air-tightly to the joint of the cathode container, and made of a ceramic material. Moreover, a molten sodium battery according to the present invention comprises: molten sodium making an anode active material; a cathode active material; a sodium container accommodating the molten sodium therein; a partition wall including an anode chamber in an interior thereof; and a cathode container air-tightly accommodating the cathode active material and the partition wall therein; and the molten sodium battery further comprises: the cathode container including a joint which has an opening communicating an inside of the cathode container with an outside thereof, and made of a metal; and the partition wall including: a partition-wall body arranged within the cathode container, having a plate shape, which includes: the anode chamber at around a central site thereof in a thickness direction thereof; and a through bore connecting the anode chamber with an outside of the anode chamber, and made of beta-alumina; and a head fitted into the opening in the joint, formed integrally with the partition-wall body, including a passage bore which is communicated with the anode chamber by way of the through bore, attached air-tightly to the joint, and made of a ceramic material.

### Constituents, Operations and Advantages of Invention

The present molten sodium battery comprises molten sodium making an anode active material, a cathode active material, and a sodium container accommodating the molten sodium therein. Moreover, an adaptable cathode active material involves molten sulfur or metal halide.

The molten sodium battery and partition wall for molten sodium battery according to the present invention comprises a partition wall, which is constituted of: a partition-wall body having a plate shape, and made of beta-alumina; and a head formed integrally with the partition-wall body, attached air-tightly to a joint in a cathode container, and made of a ceramic material. That is, a sealing construction between the partition wall and the cathode container is made into a novel sealing construction between the head in the partition wall and the joint in the cathode container. Consequently, the novel sealing construction allows sealing faces to have a cylindrical shape or annular shape, and further permits them to have a smaller diameter, making it possible to readily seal between the partition wall and the cathode container with high air-tightness.

Moreover, the partition wall for molten sodium battery according to the present invention comprises the partition-wall body whose thickness is twice as much as its own functional partition-wall thickness which serves as a solid electrolyte, and through which sodium ions pass. Consequently, the partition-wall body exhibits high bending stress resistance, which is proportional to the square of its thickness. That is, the partition-wall body exhibits a high bending strength, which is higher by four times or more than that of conventional partition walls whose functional partition-wall thickness is exactly the same as or equal to its own thickness.

The partition wall for molten sodium battery according to the present invention comprises the partition-wall body, and the head. The partition-wall body a plate shape which includes an anode chamber at around the central site in the thickness direction, and is made of beta-alumina. Note herein that the phrase, "made of beta-alumna," involves the partition-wall body all of whose parts are formed of beta-alumina, and the partition-wall body whose major part is composed of beta-alumina and the other part is partially formed of a ceramic material other than beta-alumina, such as alpha-alumina.

The phrase, "a plate shape which includes an anode chamber at around the central site in the thickness direction of the partition-wall body," implies that a plate-shaped configuration comprises: a plate-shaped front-side member disposed on the thickness-wise front side; a plate-shaped rear-side member disposed on the thickness-wise rear side; and a central member disposed in the middle, and including an anode chamber which is disposed at around the central site to extend thinly within a frame making the circumferential rim. The anode chamber is usually used under reduced pressures, and is subjected to pressures, such as atmospheric pressures, which act on the plate-shaped front-side member and plate-shaped rear-side member on the outer face side. Thus, the pressures act on the plate-shaped front-side member and plate-shaped rear-side member so as to bulge out toward the anode chamber side, namely, so as to crush down the anode chamber. In order to make the anode chamber withstand the pressures, the anode chamber is satisfactorily made into multiple pieces of tunnel-shaped spaces separated from each other at intervals and running parallel to each other; or is properly provided with pillars disposed at predetermined intervals between the plate-shaped front-side member and the plate-shaped rear-side member.

The plate-shaped front-side member and plate-shaped rear-side member of the partition-wall body fulfill the function of a partition wall through which sodium ions pass. Therefore, both the front face and rear face in the plate-shaped front-side member and plate-shaped rear-side member of the partition-wall body function as a partition-wall face, respectively. Consequently, the partition-wall body according to the present invention comes to have a large functional partition-wall face, which is twice as much as that of conventional plate-shaped partition walls free of any anode chamber in the interior.

Moreover, the partition-wall body has a wall thickness, through which sodium ions permeate, is a thickness that the plate-shaped front-side member or plate-shaped rear-side member has. Meanwhile, the partition-wall body has a thickness that is a sum of the thickness of the plate-shaped front-side member, the thickness of the plate-shaped rear-side member, and a thickness of the anode chamber in the middle, and comes to be twice or more of the wall thickness through which sodium ions pass. Assuming that the wall thickness through which sodium ions permeate is an ordinary partition-wall thickness, the partition-wall body has a large thickness, which is twice or more as thick as the ordinary partition-wall thickness. That is, the partition-wall body having the twofold-or-more thickness withstands against mechanical stresses, such as bending stresses, for instance, with strength, which is stronger against the bending stresses by a factor of four or more than that of ordinary conventional plate-shaped partition walls.

The through bore connecting the anode chamber with the outside is preferably provided in a circumferential rim of the partition-wall body, namely, in a frame-shaped member in the middle. However, the through bore is also provided satisfactorily in the plate-shaped front-side member or plate-shaped rear-side member.

Note that an employable partition-wall body involves conventional plate-shaped partition walls, which include an anode chamber at around the middle in the thickness direction, without any change.

The head is formed integrally with the partition-wall body, and is formed in a protuberant shape including the passage bore which is communicated with the anode chamber, and is made of a ceramic material. The head is joined air-tightly to the cathode container at the joint. The head offers the function of a lid closing the joint, which makes a passage leading to the outside of the cathode container, along with the function of fixing the partition wall within the cathode container. The head is also satisfactorily formed of the same beta-alumina as that the partition-wall body is formed of, or is even properly formed of another ceramic material other than beta-alumina, such as alpha-alumina, for instance.

The head has a configuration including the passage bore at around the central site, and preferably has a cylindrical shape including an axial bore at around the central site. The head preferably has a leading end protruding from the partition-wall body, and a base end integrated with the partition-wall body at the circumferential rim. The head satisfactorily has an outer peripheral face whose outside diameter is constant; the shape of a circular truncated cone whose leading end is smaller; or an annular-shaped projection or dent having a diameter which gets partially larger, or smaller conversely, in the axial direction.

The head preferably has an outside diameter equal to or larger than the thickness of the partition-wall body. An enlarged outside diameter increases the head's mechanical strength as a whole. The head, which is attached to the cylinder-shaped joint of the cathode container to be integrated with the cathode container, makes the cathode container retain the partition-wall body by way of the head. Accordingly, movements of the cathode container are conveyed to the partition-wall body by way of the head, so that large stresses act on the head, and on the boundary part between the head and the partition-wall body. Consequently, it is necessary to build the head and partition-wall body so big and sturdy that they withstand against the large stresses at the boundary part. However, note herein that the partition-wall body is made big and sturdy to have the thickness that is twice or more as large as that of ordinary conventional plate-shaped partition walls, as described above. Therefore, the partition-wall body allows building the head relatively larger as well, and permits the head to withstand the large stresses acting on the boundary part between the head and the partition-wall body.

To be concrete, the head preferably is formed as a nippled shape including a projection with an axial bore. Moreover, the joint is preferably formed as a cap shape covering the nipple-shaped head, and including an opening, which exposes the circumferential rim the head involving the axial bore. The cap-shaped joint of the cathode container is attached to the nipple-shaped head on the outer peripheral face. Thus, gases and liquids, such as watery components, are shutting off from moving between the inside and outside of the cathode chamber at the interface between the outer peripheral face in the attached nipple-shaped head and the inner peripheral face in the attaching cap-shaped joint.

The outer peripheral face in the nipple-shaped head preferably has at least one a ringed groove going around the outer peripheral face once, and serving also as a gas reservoir for the gases trying to leak out. Moreover, in order that the nipple-shaped head is readily joined to the cap-shaped joint, a metallizing treatment, such as nickel thermal spraying, is preferably performed onto the outer peripheral face in the nipple-shaped head.

Although the passage bore in the nipple-shaped head can be identical with the passage bore in the conventional ordinary plate-shaped partition walls, the passage bore is provided at around the axial central site in the nipple-shaped head in subject matters according to the present invention. The passage bore preferably makes an axial bore concentric with the outer peripheral face in the nipple-shaped head. A fine-tubed fitting comprising a metallic tubule through which molten sodium flows is inserted into the passage bore, and is joined to it. Thus, the cylindrical nipple-shaped head functions as an insulator that electrically insulates the fine-tubed fitting (which is inserted into the head' s passage bore) and the cap-shaped joint (which is attached to the head's outer peripheral face) from one another.

The fine-tubed fitting is required to be sealed to the passage bore in the nipple-shaped head with high air-tightness. However, one of the sealing surfaces is preferably composed of the outer peripheral face in the fine-tubed fitting whose outside diameter is substantially equal to an inside dimeter of the inner peripheral face in the passage bore whose diameter is from 2 to 5 mm approximately. If such is the case, a sealing diameter made smaller between the fine-tubed fitting and the passage bore makes the sealing between them more readily.

Moreover, the head preferably comprises a two-staged mound-shaped head including an upper staged portion having a top face provided with an axial bore, and a lower staged portion having an annular face, forming the joint as an annular joint including an annular portion. To an annularly staged face in the two-staged mound-shaped head, the cathode container is attached at a lower annular face in the annular portion of the annular joint. More specifically, the annular joint is preferably formed as a hat-shaped configuration including a cylindrical wall extending downward from the annular portion at the circumferential rim. The hat-shaped joint of the cathode container, which is attached to the two-staged mound-shaped head of the plate-shaped partition wall, shuts off gases and liquids, such as watery components, from moving between the inside and outside of the cathode container. An annularly staged face in the crest-shaped head, and an annular top portion in the hat-shaped joint are joined in the following manner: the mound-shaped head is first capped with the hat-shaped joint; the annular top portion in the mound-shaped head is then protruded through a central opening or hole in the annular top portion of the hat-shaped joint, bringing the annularly staged face in the mound-shaped head into contact with the annular top portion of the hat-shaped head on the inner side face; and then the annularly staged face in the mound-shaped head, and the annular top portion of the hat-shaped joint are finally heated to press join them to one another by keeping them at a predetermined temperature while applying a predetermined pressing force to them externally from the annular top portion of the hat-shaped joint.

The top face having the axial bore in the two-staged mound-shaped head is joined to the fine-tubed fitting, which comprises: an annularly-shaped flanged portion formed in the same shape as that of the top face in the two-staged mound-shaped head; and a fine-tubed portion rising up from the annularly-shaped flanged portion. Like the joining between the hat-shaped joint and the mound-shaped head, the top face in the mound-shaped head is first brought into contact with the flanged portion in the tube-shaped fitting and then capped with the hat-shaped joint; and the top face, and the flanged portion are heated to press join them to one another by keeping them at a predetermined temperature while applying a predetermined pressing force to the flanged portion in the fine-tubed fitting to press the flanged portion onto the top face in the head.

The two-staged mound-shaped head, the hat-shaped joint, and the fine-tubed fitting are preferably joined to each other at once simultaneously. Moreover, the head, which is separated from the partition-wall body, is more preferably joined to the hat-shaped joint and fine-tubed fitting.

Fabricating the plate-shaped partition-wall body having the anode chamber in the interior, or fabricating the partition wall comprising the partition-wall body and the head is made possible by forming a plate-shaped front-side member and plate-shaped rear-side member, each of which is made by halving the partition-wall body with a face passing through the anode chamber at a substantially middle in the plate thickness, and then bonding the plate-shaped front-side member and plate-shaped rear-side member together to integrate them. The integration is carried out satisfactorily at the time of sintering assemblage, namely, green compacts, which are in the pre-sintering stage before turning into the plate-shaped front-side member and plate-shaped rear-side member, are sintered and adhered together simultaneously; or it is carried out properly by bonding the plate-shaped front-side member and plate-shaped rear-side member, which have been sintered, with a joining agent. Note that using faces, which are molded by the cavity faces of a mold when the green compacts are formed, as faces on which the green compacts are bonded together, permit readily enhancing the dimensional accuracy in the bonded plate-shaped front-side member and rear-side member at the bonded faces.

The partition-wall body, or the partition wall preferably further comprises a pillar-shaped joining member (or spacer) intervening between the plate-shaped front-side member and the plate-shaped rear-side member. Moreover, the partition-wall body, or the partition wall, is also formed preferably by such a method as employing a disappearing mold that is burned down to disappear to form the anode chamber.

The metallic cathode container is a constituent that accommodates and fixes the plate-shaped partition wall in the interior along with forming the cathode chamber that surrounds the plate-shaped partition wall around the circumference. An employable metal for making the cathode container involves metals, such as stainless steels and aluminum alloys, which exhibit corrosion resistance to molten sulfur and molten sodium polysulfide.

The cathode container comprises the joint communicating the interior of the cathode chamber with the exterior. As described earlier, the joint is attached to the head of the plate-shaped partition wall, sealing the interior and exterior of the cathode chamber air-tightly. Forming the head in a nipple shape allows forming the joint in a cap shape. An employable method for joining an outer peripheral face in the nipple-shaped head to an inner peripheral face in the cap-shaped joint involves one or two or more of the following methods: using a waxy agent, such as glass-powder joining agents and silver waxes; using a thermal pressure joining method; carrying out thermal shrink fitting by heating the cap-shaped joint alone and then attaching the heated cap-shaped joint onto the nipple-shaped head that is kept cold; and tightening the cap-shaped joint on and around the outer peripheral face with a tightening fitting.

The following steps of operations make it possible to readily join between the head and the joint: the joint, which is made to be separated from a cathode-container body, is joined to the cathode-container body; and thereafter the joint is integrated with the cathode-container body by a laser welding machine, or the like. Moreover, the present invention allows providing a part of the cathode-container body, which is present around the joint, with an easily-displaceable means having a bellows shape, or the like, for making the joint and cathode-container body displaceable relatively to one another. A usable easily-displaceable member involves a device comprising a wheel-shaped metallic plate which is molded to include an annular dent and annular projection spreading concentrically, a bellows, or a flexible tube. In addition, the present invention permits providing an inner peripheral face in the cathode container with a guide regulating or controlling positions of the partition-wall body in the partition wall, or providing the inner peripheral phase with an urging means pressing the partition-wall body toward the nipple-shaped head to regulate or control positions of the partition-wall body.

The molten sodium battery according to the present invention requires a sodium container retaining most of the molten sodium therein. Since the present molten sodium battery comprises the anode chamber formed in the interior of the plate-shaped partition wall, the anode chamber has a small volume. Meanwhile, since the present molten sodium battery is a battery suitable for large-capacity discharging, it requires the molten sodium in a large volume. A sodium container, which is communicated with the anode chamber through the fine-tubed fitting, retains the large-volume molten sodium therein.

In the molten sodium battery according to the present invention, both of the cathode chamber and the anode chamber involving a sodium container require high-degree air-tightness. Moreover, the present molten sodium battery is subjected to a temperature change of 50°C approximately for every cycle during which it is operated to charge and discharge. Consequently, the anode chamber and cathode chamber are employed under a reduced pressure. The present molten sodium battery comprises the partition wall enclosed in the cathode chamber, and the anode chamber formed inside the partition wall. In order that no tensile stress acts on the partition wall, the anode chamber is preferably depressurized more than the cathode chamber is depressurized. For example, the anode chamber is preferably depressurized to a degree of depressurization close to a vacuum.

Note that the molten sodium battery according to the present invention comprises, in addition to the anode chamber and cathode chamber, the other battery constituent elements, which are basically identical with those of conventional sodium-sulfur batteries and sodium-molten salt batteries.

### BRIEF DESCRIPTION OF THE DRAWINGS

Fig. 1 is a vertical cross-sectional diagram of a sodium-sulfur battery according to First Embodiment;
Fig. 2 is a cross-sectional diagram in which Fig. 1 is enlarged partially;
Fig. 3 is a partial plan view of a partition wall whose cross-sectional diagram is illustrated in Fig. 2;
Fig. 4 is a vertical cross-sectional diagram of a major part in a sodium-sulfur battery according to Second Embodiment;
Fig. 5 is a vertical cross-sectional diagram of a cross section of a major part in a partition wall whose cross-sectional diagram is illustrated in Fig. 4, and which is viewed in such a direction as turning the partition wall shown in Fig. 4 by 90 degrees; and
Fig. 6 is a vertical cross-sectional diagram of a major section in a sodium-sulfur battery according to Third Embodiment.

### MODE FOR CARRYING OUT THE INVENTION

### (Description of Embodiment Modes)

The present invention will be hereinafter described more specifically while presenting embodiments of a sodium-sulfur battery according to the present invention.

### First Embodiment

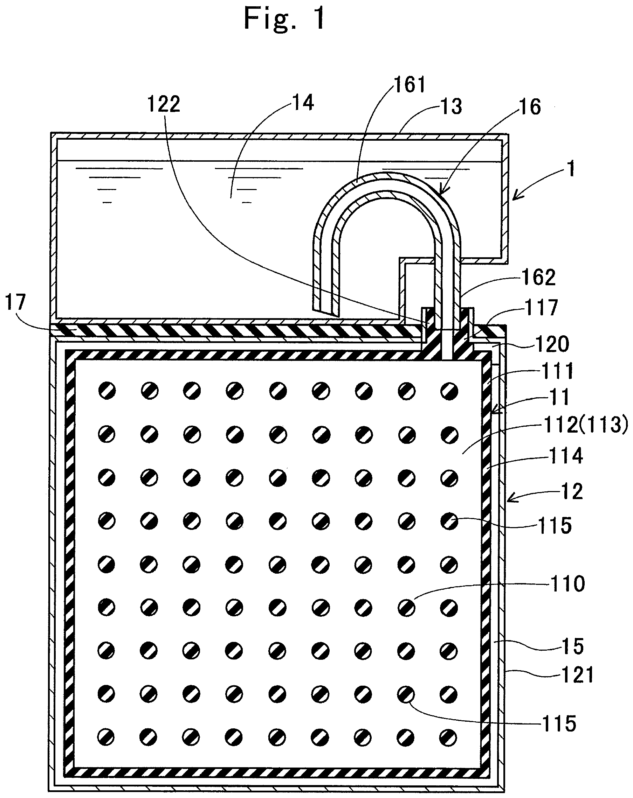

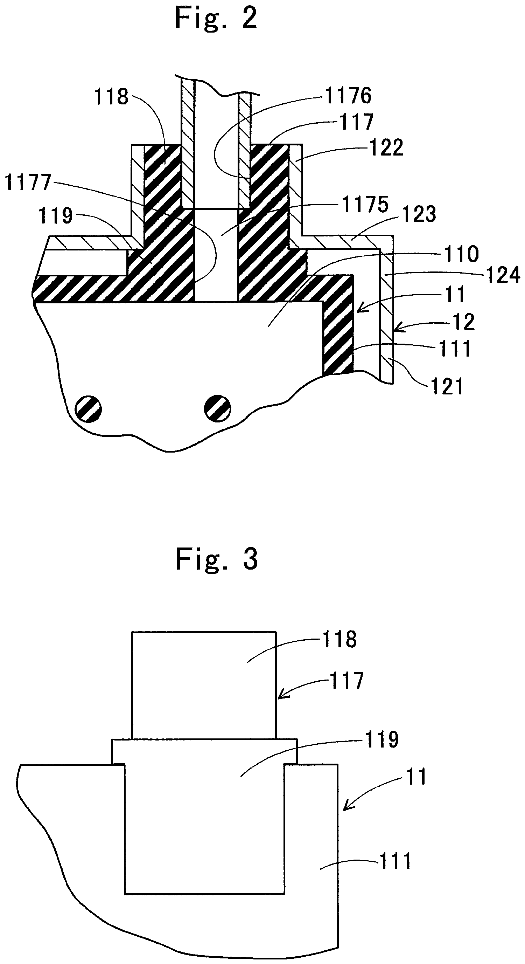

A sodium-sulfur battery 1 according to First Embodiment of the present invention will be hereinafter described based on Figs. 1 through 3. Note herein that Fig. 1 illustrates a vertical cross section in the sodium-sulfur battery 1; Fig. 2 illustrates an enlarged cross section of its major part; and Fig. 3 illustrates a plane of its partition wall 11 partially.

The battery 1 comprises the following major constituent elements: a partition wall 11; a cathode container 12; a sodium container 13; an anode chamber 110 formed as an internal space in the partition wall 11; a cathode chamber 120 enclosing the partition wall 11 within an internal space in the cathode container 12; molten sodium 14 accommodated inside the anode chamber 110 and inside the sodium container 13, and making an anode active material; molten sulfur 15 accommodated in the cathode chamber 120, and making a cathode active material; a fine-tubed fitting 16 communicating the anode chamber 110 with the internal space in the sodium container 12; and an insulator 17 intervening between the cathode container 12 and the sodium container 13, and insulating the two electrically. The battery 1, which uses the molten sulfur 15 as a cathode active material, makes a sodium-sulfur battery.

The partition wall 11 comprises a plate-shaped partition-wall body 111, and a nipple-shape head 117, both of which are formed of beta-alumina integrally. The partition-wall body 111 includes: a front-side member 112; a rear-side member 113; a frame-shaped member 114; a pillar-shaped member 115 in a quantity of 81 pieces. The partition-wall body 111 has a squared plate shape having 100 mm approximately in each of length and width, and 2 mm approximately in thickness. The front-side member 112 and rear-side member 113 have a squared configuration having 100 mm in each of length and width, and 2 mm in thickness. The frame-shaped member 114 has a squared configuration having 100 mm approximately in each of length and width, 2 mm in the breadth, and 2 mm in thickness, and is located between the front-side member 112 and the rear-side member 113. The pillar-shaped members 115 have a columnar shape having 2 mm in outside diameter and 2 mm in thickness, and are located between the front-side member 112 and the rear-side member 113 at equal intervals.

The nipple-shaped head 117 includes an upper member 118, and a lower member 119, making a configuration formed as a two-staged columnar protuberance, as its outer side face is shown in Fig. 3. The upper member 118 has a columnar shape having 10 mm approximately in outside diameter, and 8 mm in height. The lower member 119 has a columnar shape having 13 mm approximately in outside diameter, and 12 mm approximately in height. Note that the lower member 119, which is formed integrally with the partition-wall body 111, is covered on some of the outer peripheral face partially with the partition-wall body 111, as illustrated in Fig. 3. Moreover, the nipple-shaped head 117 further includes a passage bore 1175 composed of an upper axial-bore portion 1176 and lower axial-bore portion 1177. The upper axial-bore portion 1176 has 4 mm approximately in inside diameter, and 5 mm approximately in length. The lower axial-bore portion 1177 has 3 mm approximately in inside diameter, and 7 mm approximately in length. The lower axial-bore portion 1177 is opened to the anode chamber 110.

The nipple-shaped head 117 includes the lower member 119 that is integrated not only with a side end face in the partition-wall body 111 but also with surfaces in the front-side member 112 and rear-side member 113 linking to the side end face. Thus, the lower member 119 appears to make some of the partition-wall body 111. As a result, the nipple-shaped head 117, and the partition-wall body 111 are integrated to a higher degree.

The partition wall 11 is produced as follows: sodium oxide and alpha-alumina are calcined to synthesize beta-alumina in advance; the resulting beta-alumina is granulated to obtain a beta-alumina fine powder; the resultant beta-alumina fine powder is used to mold a front-side green compact and rear-side green compact, which divide the partition-wall body 11 into halves at around the middle in the thickness direction; the resulting front-side green compact and rear-side green compact are combined with one another to make a partition-wall green compact; and the resultant partition-wall green compact is sintered. Note that an adaptable production process preferably comprises the steps of: molding each of the half-divided faces in the front-side green compact and rear-side green compact with a mold; and compression molding the front face and rear face with a rubber mold. In the as-sintered partition wall 11, the nipple-shaped head 117 is molded preferably to have a slightly larger outer peripheral face; the passage bore 1175 is molded preferably to have a slightly smaller inner peripheral face: and the stepped faces, which are located between the outer peripheral faces in the upper member 118 and lower member 119 of the nipple-shaped head 117, and the passage bore 1175 are preferably machined to higher dimensional accuracy by grinding, or the like.

The cathode chamber 12 comprises a container body 121 formed in the shape of a rectangular parallelepiped, and a cap 122 formed integrally on the top face in the container body 121. The container body 121 has 105 mm approximately in each of length and width, and 50 mm approximately in thickness. The cap 122 has 12 mm approximately in outside diameter, 10 mm approximately in inside diameter, and 10 mm approximately in height. The cathode container 12 is formed of a stainless-steel plate whose thickness is 1 mm approximately. To be more concrete, the cathode container 12 is formed of three portions, namely, a top lidded portion 123 involving the cap 122, a bottom lidded portion (not shown) in the container body 121, and a trunked portion 124, other than the top lidded portion 123 and bottom lidded portion, in the container body 121.

The top lidded portion 123, and the partition wall 11 are integrated with one another as follows: the top lidded portion 123 involving the cap 122 is first mounted onto the upper member 118 of the nipple-shaped head 117 until the lower end of the cap 122 comes in contact with the upper end face in the lower member 119 of the nipple-shaped head 117; and then the outer peripheral face in the upper member 118, and the inner peripheral face in the cap 122 are joined to one another by thermal shrink fitting and thermal pressure bonding.

Note that, before or after the joining operation, the free end of a shorter portion 162 in the fine-tubed fitting 16 is inserted into the upper axial-bore portion 1176 of the passage bore 1175 in the upper member 118 of the head 117 in the partition wall 11, and then the shorter portion 162 and the upper axial-bore portion 1176 are joined to one another.

Moreover, the top lidded portion 123 to which the partition wall 11 is joined, and the trunked portion 124 are integrated with one another by laser welding. In addition, a felt-like current collector (not shown), which has 100 mm approximately in each of length and width and 18 mm approximately in thickness and which is composed of carbon fibers with sulfur impregnated, is prepared. The thus prepared felt-like current collector is inserted into the opposite sides of the partition wall 11, which is retained within the container body 121, through the opened bottom of the trunked portion 124. Finally, the trunked portion 124, and the bottom lidded portion are integrated with one another by laser welding, forming the cathode container 12.

The sodium container 13 is a container which is provided with a cutout. The sodium container 13 is formed in the shape of a rectangular parallelepiped, and has 50 mm approximately in each of length and thickness and 105 mm in width. The cutout is disposed at one of the opposite ends on the lower side of the sodium container 13, and is formed in the shape of a rectangular parallelepiped having 20 mm approximately in height, 25 mm approximately in length and 50 mm approximately in breadth. The sodium container 13 is formed of a stainless-steel plate whose thickness is 1 mm approximately.

The fine-tubed fitting 16 is a fine tube having 3 mm in diameter and 1 mm approximately in thickness, and made of a stainless steel. The fine-tubed fitting 16 comprises: a longer portion 161 with an end one of whose opposite ends has a widened diameter; and the shorter portion 162 with an end whose diameter is narrowed down and is inserted into the widened-diameter end of the longer portion 161. As illustrated in Fig. 1, the fine-tubed fitting 16 is welded air-tightly at one of the opposite ends to the sodium container 13 so that the longer portion 161 penetrates through the upper face of the sodium container 13 with the cutout provided; and is bent in an inverted letter-"U" shape to make the other one of the opposite ends locate adjacent to an inner bottom face of the sodium container 13. As illustrated in Fig. 2, the fine-tubed fitting 16 is further joined air-tightly so that the shorter portion 162 is inserted into the axial-bore portion 1176 of the passage bore 1175 in the nipple-shaped head 117. When the sodium container 13 is assembled with the cathode container 12, the longer portion 161 and shorter portion 162 of the fine-tubed fitting 16, and the sodium container 13 and nipple-shaped head 117 are joined to each other as follows: each of the longer portion 161 and shorter portion 162 is fitted at the free end into the mating member coaxially; and thereafter each of the coaxially-fitted free ends and the mating member are adhered together by heating.

The insulator 17, which comprises a sheet having 3 mm approximately in thickness and is made of inorganic fibers, intervenes between the cathode container 12 and the sodium container 13 to electrically insulate between the two .

After the cathode container 12 has been assembled with the sodium container 13, molten sodium is injected into the sodium container 13 through a not-shown injector pipe. Then, the interiors of the sodium container 13 and anode chamber 110 are put in a near-vacuum state by deaerating the sodium container 13 and anode chamber 110 and finally closing the injector pipe.

Thereafter, the interior of the cathode container 12 is deaerated through a not-shown deaerator pipe. Then, the deaerator pipe is closed after the anode chamber 110 has been depressurized more than the cathode chamber 120 is depressurized.

The sodium-sulfur battery according to First Embodiment is constructed as described above. The present sodium-ion battery, which is heated to 300°C approximately and whose cathode container 12 and sodium chamber 13 making a cathode terminal and anode terminal respectively are connected to an external load, functions in the same manner as ordinary sodium-sulfur batteries do.

The sodium-sulfur battery according to First Embodiment seals the cathode chamber 120 air-tightly from the outside at one location, namely, the sealing between the outer peripheral face in the nipple-shaped head 117 of the partition wall 11 and the inner peripheral face in the cap 122 of the cathode container 12. That is, the cathode chamber 120 is sealed air-tightly from the outside at one location, namely, the coaxially cylindrical simple sealing between a pillar-shaped nipple and a cylindrical cap. It is easy not only to finish a cylindrical sealing face but also to give it enhanced dimensional accuracy. Consequently, it is easy to seal the cathode chamber 120 air-tightly from the outside. In particular, the nipple-shaped head 117, and the cap 122, which is subjected to thermal shrink fitting to mechanically tighten the nipple-shaped head 117, provide an advantage of making the sealing faces less likely to peel off from the substrates.

Moreover, the top lidded portion 123 involving the cap 122 according to First Embodiment is attached to the upper member 118 in the nipple-shaped head 117 of the partition wall 11 until the lower end of the cap 122 comes in contact with the upper end face in the lower member 119 of the nipple-shaped head 117. Accordingly, strains, which occur between the partition wall 11 and the cathode container 12, concentrate on the lower end of the cap 122, and on the upper end face in the lower member 119 of the nipple-shaped head 117, but are less likely to arise in the outer peripheral face in the upper member 118 of the nipple-shaped head 117 joined to the cap 122, and in the inner peripheral face in the cap 122 joined to the nipple-shaped head 117. Consequently, the joinder faces between the cap 122 and the nipple-shaped head 117 are less likely to peel off from one another.

In addition, the nipple-shaped head 117, which is composed of the upper member 118 joined to the cap 122 and the lower member 119 made thicker than is the upper member 118, is integrated at the thicker lower member 119 with the partition-wall body 111. Thus, the nipple-shaped head 117 gives a sturdy configuration against stresses acting between the nipple-shaped head 117 and the partition-wall body 111.

Moreover, the plate-shaped partition-wall body 111, which might be weak to mechanical stresses, is retained in such a state as floating within the anode chamber 110. Accordingly, the plate-shaped partition-wall body 111 is held under a condition where tensile stresses, such as bending or flexural stresses, are less likely to partially act on it. Consequently, the plate-shaped partition-wall body 111 constitutes a novel partition wall, which is so durable that chances of being broken down are low.

### Second Embodiment

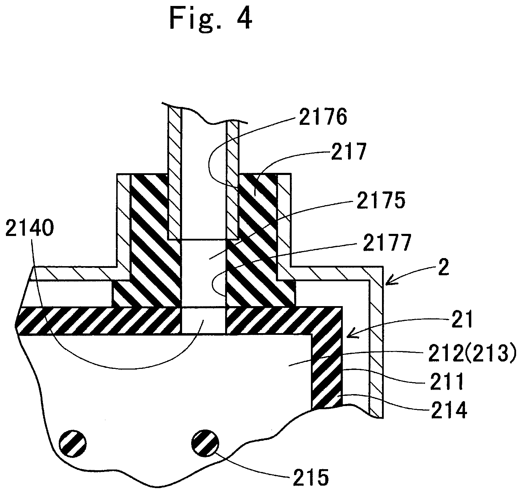

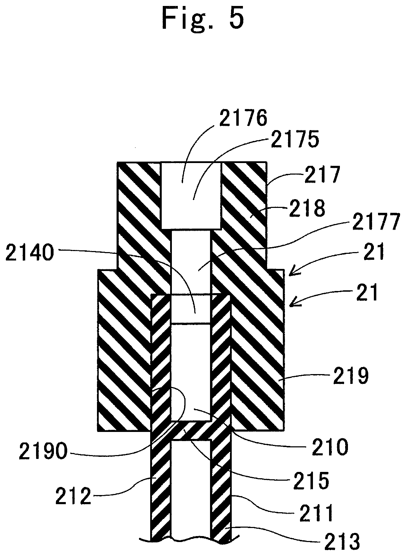

A sodium-sulfur battery 2 according to Second Embodiment of the present invention will be hereinafter described based on Figs. 4 and 5. The sodium-sulfur battery 2 comprises, instead of the partition wall 11 of the sodium-sulfur battery 1 according to First Embodiment, a modified partition wall 21. The partition wall 21 will be hereinafter described mainly, because the sodium-sulfur battery 2 comprises the same constituent elements as those of the sodium-sulfur battery 1, other than the partition wall 21.

Fig. 4 illustrates a vertical cross section of a major part of the sodium-sulfur battery 2. Fig. 5 illustrates a chief constituent element of the major part illustrated in the cross-sectional diagram shown in Fig. 4, namely, the partition wall 21, in another cross section in which the sodium-sulfur battery 2 illustrated in Fig. 4 is viewed in such a direction as turning it by 90 deg. from the cross-sectional diagram shown in Fig. 4.

The partition wall 21 comprises a plate-shaped partition-wall body 211 formed of beta-alumina, and a nipple-shaped head 217 formed of alpha-alumina. The partition-wall body 211 and head 217 are integrated by joining them integrally to one another with a glass solder.

The partition-wall body 211 comprises a front-side member 212, a rear-side member 213, a frame-shaped member 214, and a pillar-shaped member 215 in a quantity of 81 pieces. The front-side member 212 and rear-side member 213 are formed in the shape of a squared plate having 100 mm approximately in each of length and width and 6 mm approximately in thickness. The frame-shaped member 214 is formed in the shape of a squared plate having 100 mm in each of length and width, 2 mm in breadth, and 2 mm in thickness, and is located between the front-side member 212 and the rear-side member 213. The pillar-shaped members 215 are formed in the shape of a pillar having 2 mm in outside diameter, and 2 mm in thickness, and are located at equal intervals between the front-side member 212 and the rear-side member 213. An interspace between the front-side member 212 and the rear-side member 213 makes an anode chamber 210. A passage bore 2140, which makes a passage communicating the anode chamber 210 with the outside, is formed in the frame-shaped member 214.

The same manufacturing method as that described in First Embodiment for manufacturing the partition wall 11 allows manufacturing the partition-wall body 211.

The nipple-shaped head 217 comprises a pillar-shaped upper member 218 and a pillar-shaped lower member 219, forming the configuration of a two-staged pillar-shaped protuberance, as its vertical cross section is illustrated in Fig. 5. The upper member 218 has 10 mm approximately in outside diameter, and 8 mm approximately in height. The lower member 219 has 13 mm approximately in outside diameter, and 12 mm approximately in height.

A groove 2190 is formed at around the middle in the lower face of the lower member 219. The groove 2190 pierces the both cross-sectionally rectangular side faces of the lower member 219. The groove 2190 has 6 mm approximately in width, and 10 mm approximately in depth. To the groove 2190, the partition-wall body 211 is attached at one of the opposite ends in which the passage bore 2140 is formed.

A passage bore 2175 is formed in the upper member 218 of the nipple-shaped head 217. The passage bore 2175 is opened at one of the opposite ends to the upper member 218 of the nipple-shaped head 217, and is opened at the other one of the opposite ends to the groove 2190. The passage bore 2175 is composed of an upper axial-bore portion 2176, and a lower axial-bore portion 2177. The upper axial-bore portion 2176 has 4 mm approximately in inside diameter, and 5 mm approximately in depth. The lower axial-bore portion 2177 has 3 mm approximately in inside diameter, and 7 mm approximately in depth.

The following manufacturing processes make it possible to produce the nipple-shaped head 217: forming a pillar-shaped green compact made of alpha-alumina and having a size that is a bit larger than the predetermined dimensions; shaping the green compact by machining; sintering the shaped green compact; and then finishing the sintered green compact to the predetermined dimensions by machining.

The partition wall 21 is available by joining the nipple-shaped head 217 at one of the opposite ends, in which the passage bore 2140 is formed, to the partition-wall body 211 with a glass solder.

In the same manner as the partition wall 11 according to First Embodiment, the partition wall 21 likewise comprises the nipple-shaped head 217 integrated at the thick lower member 219 with the partition-wall body 211. Thus, the thick lower member 219 enhances the integrality between the nipples-shaped head 217 and the partition-wall body 211.

Descriptions on how the sodium-sulfur battery 2 according to Second Embodiment is constructed are abbreviated herein because it is constructed identically with that of the sodium-sulfur battery 1 according to First Embodiment.

The method for manufacturing the partition wall 21 of the sodium-sulfur battery 2, method which comprises the steps of: dividing the partition wall 21 into two components parts, the partition-wall body 21 and nipple-shaped body 217; and thereafter integrating the two component parts, is effective in adopting a forming method in which an electrophoretic deposition process produces only a green compact with a substantially equal wall thickness.

### Third Embodiment

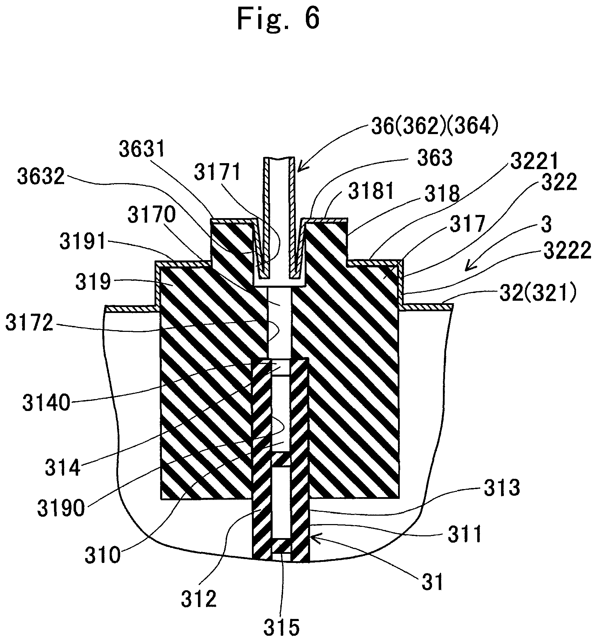

A sodium-sulfur battery 3 according to Third Embodiment of the present invention will be hereinafter described based on Fig. 6. The sodium-sulfur battery 3 comprises a modified partition wall 31, a modified cathode container 32, and a modified fine-tubed fitting 36, instead of the partition wall 11, cathode container 12 and fine-tubed fitting 16 of the sodium-sulfur battery 1 according to First Embodiment. The other constituent elements of the sodium-sulfur battery 3 are identical with those of the sodium-sulfur battery 1.

Fig. 6 illustrates a vertical cross section of a major part of the sodium-sulfur battery 3. Note that the cross section shown in Fig. 6 corresponds to a cross section viewed in such a direction as turning the cross section shown in Fig. 4 by 90 deg. That is, the viewing direction is identical with the direction in which Fig. 5 is viewed.

The partition wall 31 comprises a plate-shaped partition-wall body 311 formed of beta-alumina, and a nipple-shaped head 317 formed of alpha-alumina. The partition-wall body 311 and head 317 are joined integrally to one another with a glass solder.

The partition-wall body 311 has the shape of a squared plate, and comprises a front-side member 312, a rear-side member 313, a frame-shaped member 314, and pillar-shaped members 315. An interspace between the front-side member 312 and the rear-side member 313 makes an anode chamber 310. A passage bore 3140, which makes some of a passage communicating the anode chamber 310 with an external sodium tank or container, is formed in the framed member 314. Note that the partition-wall body 311 is identical with the partition-wall body 211 according to Second Embodiment.

The head 317 has the shape of a two-staged mound-shaped head, and comprises an upper staged portion 318, and a lower staged portion 319. The upper stagedportion 318 includes an axial bore 3170 along with a top face 3181. The lower staged portion 319 includes an annular shouldered face 3191.

The axial bore 3170 in the head 317 includes an upper axial bore 3171, and a lower axial bore 3172. The upper axial bore 3171 has 6 mm in inside diameter, and 7 mm in depth. The lower axial bore 3172 extends downward concentrically with the upper axial bore 3171, and has 3 mm in inside diameter, and 8 mm in depth. The upper staged portion 318 of the head 317 has 16 mm in outside diameter, and 5 mm in height. The lower staged portion 319 of the head 317 has 27 mm in outside diameter, and 26 mm in height. The annular shouldered face 3191 in the lower staged portion 319 has 16 mm in inside diameter, 27 mm in outside diameter, and 5.5 mm in width.

The lower staged portion 319 is provided with an engagement groove 3190 at the lower end. The engagement groove 3190 has the center coinciding with the axial center of the lower staged portion 319, has 6 mm in width, and 16 mm in depth, and is opened at the opposite ends. The axial bore 3170 is opened in the upper face in the engagement groove 3190. The head 317 has a line-symmetric configuration with respect to the axial center of the axial bore 3170, and makes a two-staged head mound-shaped with 31 mm in height.

The head 317 is also produced by the same manufacturing method as the above-described method for the head 217 according to Second Embodiment . The partition wall 31 is obtained by joining the head 317 with a glass solder to one of the opposite ends of the partition-wall body 311 in which the through bore 3140 is formed. The partition wall 31 likewise comprises the head 317 integrated at the thick lower stage 319 with the partition-wall body 311 in the same manner as the partition wall 21 according to Second Embodiment. Thus, the thick lower staged portion 319 enhances the integrality between the head 317 and the partition-wall body 311.

The cathode container 32 comprises a container body 321, and a hat-shaped joint 322 formed integrally with a top-face site in the container body 321. The container body 321 is formed in the shape of a rectangular parallelepiped with 105 mm approximately in each length and width, and 50 mm approximately in height. The hat-shaped joint 322 includes a top-face portion 3221, and a cylindrically-walled portion 3222. The top-face portion 3221 with 28 mm in outside diameter is provided with an opening having 16 mm in diameter. The cylindrically-walled portion 3222 with 28 mm in outside diameter and 5 mm in height extends downward from the circumferential rim of the top-face portion 3221. Moreover, the cathode container 32 is formed of a stainless-steel plate with 1 mm approximately in thickness.

To be more concrete, the cathode container 32 comprises two parts, namely, a top lidded part involving the hat-shaped joint 322, and a container-body part excluding the top lidded part and/or the hat-shaped joint 322. Note herein that the hat-shaped joint 322 includes the top-face portion 3221, and the cylindrically-walled portion 3222.

The following method achieves the joining between the top lidded part involving the hat-shaped joint 322 and the head 317 of the partition wall 31. First, the top lidded part is put at the hat-shaped joint 322 onto the head 317 of the partition wall 322. Then, the head 317 is protruded at the upper staged portion 318 through the opening in the top-face portion 3221 of the hat-shaped joint 322. Moreover, the top-face portion 3221 is brought into contact at the lower face with the annular shouldered face 3191 in the lower staged portion 319 of the head 317, attaching the hat-shaped joint 322 to the head 317 of the partition wall 31. Under the circumstances, the inner peripheral face in the cylindrically-walled portion 3222 of the hat-shaped joint 322, and the outer peripheral face in the lower staged portion 319 of the head 317 are fitted coaxially with one another. Moreover, the top lidded part involving the hat-shaped joint 322 is fixed to and retained on the head 317 of the partition wall 31. In this way, the top-face portion 3221 in the thus fixed and retained hat-shaped joint 322 is held firmly on the annular shouldered face 3191 in the lower staged portion 319 of the head 317.

A predetermined pressing force is applied to the hat-shaped joint 322, which is put under the above-described conditions, from an upward face in the top-face portion 3221 of the hat-shaped joint 322, pressing the top-face portion 3221 onto the annular shouldered face 3191 in the lower staged portion 319 of the head 317. The hat-shaped joint 322 and head 317, which are put under the pressed condition, are heated to a predetermined temperature, and are then kept under the heated condition for a predetermined time, joining the hat-shaped joint 322 at the lower face in the top-face portion 3221 and the head 317 at the annular face in the lower staged portion 319 to one another by thermal diffusion. Thus, the partition wall 31 is joined to the top lid of the cathode container 32.

Simultaneously with the above-described joining, a shorter portion 362 in the fine-tubed fitting 36 is joined to the annular top face 3181 in the upper staged portion 318 of the head 317 by thermal diffusion. The fine-tubed fitting 36 is composed of two portions, namely, a longer portion 361, and the shorter portion 362. The longer portion 361 is identical with a longer portion in the fine-tubed fitting 16 according to First Embodiment. As illustrated in Fig. 6, the shorter portion 362 in the fine-tubed fitting 36 comprises an end segment 363 formed in the shape of a flanged funnel, and a fine-tubed segment 364 formed in the shape of a tubule. The funnel-shaped end segment 363 includes an annular flange 3631, and a leg 3632 whose outer peripheral configuration is formed as a circular truncated cone. The leg 3632 is integrated at the lower end with the lower end of the fine-tubed segment 364 by welding under such a condition as locating its axially core site concentrically with the fine-tubed segment 364.

As illustrated in Fig. 6, the fine-tubed fitting 36 is joined at the shorter portion 362 to the upper staged portion 318 of the head 317 by thermal diffusion. Specifically, the leg 3632 of the funnel-shaped end segment 363 is inserted into the upper axial bore 3171 in the upper staged portion 318 of the head 317. Then, the downward face in the flange 3631 of the shorter portion 362 is brought into contact with the annular top face 3181 in the upper staged portion 318. Finally, the thus sub-assembled fine-tubed fitting 36 and head 317 are heated at a predetermined temperature while applying a predetermined pressing force onto the upward face in the flange 3631, joining the flange 3631 at the downward face to the annular top face 3181 in the upper staged portion 318 by thermal diffusion.

The top lid and container body 321 of the cathode container 32 are integrated with one another in the following manner. First, felt made of carbon fibers impregnated with sulfur is put into the container body 321. Subsequently, the partition wall 31 is inserted into the container body 321, and then the top lid is put on the container body 321. Thereafter, the container body 321, and the top lid are integrated by laser welding, or are joined by crimping.

The sodium-sulfur battery 3 according to Third Embodiment is constructed as described above. The partition wall 31 and cathode container 32 of the sodium-sulfur battery 3 are integrated by the hat-shaped joint 322 of the cathode container 32. The hat-shaped joint 322 comprises the top-face portion 3221, and the cylindrically-walled portion 3222. The top-face portion 3221 is integrated with the annular shouldered face 3191 in the lower staged portion 319 in the head 317 of the partition wall 31, and the cylindrically-walled portion 3222 is integrated with the upper site of the outer peripheral face in the lower staged portion 319. Accordingly, the upper site of the outer peripheral face in the lower staged portion 319, and the cylindrically-walled portion 3222 of the hat-shaped joint 322 first come to be subjected to strains, such as relative deformations, which act between the partition wall 31 and the cathode container 32. Consequently, strains, like relative deformations, which act between the partition wall 31 and the cathode container 32, do not act directly on the annular shouldered face 3191 and top-face portion 3221 making the joinder faces. Thus, the hat-shaped joint 322 lowers the possibilities of the integrated partition wall 31 and cathode container 32 being broken down at the joinder faces.

Likewise, the upper axial bore 3171 in the upper staged portion 318, and the circular truncated cone-shaped leg 3632 in the fine-tubed fitting 36 at first come to be subjected to strains, such as relative deformations, which act between the partition wall 31 and the sodium container 13.

Consequently, strains, like relative deformations, which act between the partition wall 31 and the sodium container 13, do not act directly on the joinder faces made between the annular top face 3181 in the upper staged portion 318 and the flange 3631 in the funnel-shaped end segment 363. Thus, the upper axial bore 3171 and leg 3632 lower the possibilities of the integrated partition wall 31 and sodium container 13 being broken down at the joinder faces.

### Explanation on Reference Numerals

(1, 2 or 3): Sodium-sulfur Battery;
(11, 21 or 31): Partition Wall;
(12 or 32): Cathode Container;
13: Sodium Container;
(16 or 36): Fine-tubed Fitting;
(111, 211 or 311): Partition-wall Body;
(117 or 217): Nipple;
121: Container Body; and
122: Cap

## Claims

1. A partition wall for molten sodium battery, the partition wall comprising:
a partition-wall body arranged within a metallic cathode container including a joint which has an opening communicating an inside of the cathode container with an outside thereof, the partition-wall body having a plate shape, which includes: an anode chamber at around a central site thereof in a thickness direction thereof; and a through bore connecting the anode chamber with an outside of the anode chamber, and made of beta-alumina; and
a head fitted into the opening in the joint, formed integrally with the partition-wall body, including a passage bore which is communicated with the anode chamber by way of the through bore, attached air-tightly to the joint of the cathode container, and made of a ceramic material.

2. The partition wall for molten sodium battery as set forth in claim 1, wherein:
the joint has a cylindrical shape; and
the head has a nippled shape attached to an inner peripheral face in the cylinder-shaped joint.

3. The partition wall for molten sodium battery as set forth in claim 1, wherein:
the joint comprises a part including the opening, and an annular attachment face demarcating the opening; and
the head comprises a central part including the passage bore, and another part present around the central part, and including an annular attachment face joined to the attachment face of the joint.

4. The partition wall for molten sodium battery as set forth in claim 3, wherein:
the joint has a hat shape comprising a top-face portion including a part which has the annular attachment face, and a cylindrical walled portion extending downward from a circumferential edge of the top-face portion; and
the head comprises an upper staged portion including the passage bore, and a lower stage portion present around the upper staged portion, and including an annular attachment face joined to the attachment face of the joint.

5. The partition wall for molten sodium battery as set forth in one of claims 1 through 4, wherein the ceramic material comprises at least one member selected from the group consisting of beta-alumina and alpha-alumina.

6. The partition wall for molten sodium battery as set forth in one of claims 1 through 5, wherein at least the partition-wall body comprises a front-side portion and a rear-side portion, the front-side portion and rear-side portion divided by an imaginary face passing through the anode chamber; and is integrated by joining the front-side portion and rear-side portion directly or by way of a joining member.

7. The partition wall for molten sodium battery as set forth in one of claims 1 through 5, wherein at least the anode chamber is formed with a disappearing mold.

8. A molten sodium battery comprising: molten sodium making an anode active material; a cathode active material; a sodium container accommodating the molten sodium therein; a partition wall including an anode chamber in an interior thereof; and a cathode container air-tightly accommodating the cathode active material and the partition wall therein;
the molten sodium battery further comprising:
the cathode container including a joint which has an opening communicating an inside of the cathode container with an outside thereof, and made of a metal; and
the partition wall including:
a partition-wall body arranged within the cathode container, having a plate shape, which includes: the anode chamber at around a central site thereof in a thickness direction thereof; and a through bore connecting the anode chamber with an outside of the anode chamber, and made of beta-alumina; and
a head fitted into the opening in the joint, formed integrally with the partition-wall body, including a passage bore which is communicated with the anode chamber by way of the through bore, attached air-tightly to the joint, and made of a ceramic material.

9. The molten sodium battery as set forth in claim 8 further comprising a metallic tubule communicated with the passage bore in the head to communicate the sodium container with the anode chamber.

10. The molten sodium battery as set forth in claim 8 or 9, wherein the cathode active material comprises molten sulfur or metal halide.
